# EUROPEAN PATENT APPLICATION

(11) **EP 3 919 568 A1**
(43) Date of publication of application: **08.12.2021**
(21) Application number: 20178306.5
(22) Date of filing: 04.06.2020
(51) Int. Cl.: C08L 97/02, C08L 91/00, C08L 67/00, C08L 3/02, C08L 1/02, B65D 65/46, C08K 3/34

(54) **BIODEGRADABLE AND COMPOSTABLE COMPOSITION**

(71) Applicant: Gaia Holding AB, 253 68 Helsingborg (SE)
(72) Inventor: ROSÉN, Åke, 254 54 HELSINGBORG (SE)
(74) Representative: AWA Sweden AB

(57) **Abstract**

The present invention concerns a biodegradable and compostable composition comprising i) 0-40 % by weight of at least one biodegradable and/or decayable aromatic ester; ii) 0-15 % by weight of dolomite particles having a polished surface; iii) 5-15 % by weight of starch of vegetable origin chosen from at least one of wheat, oat, rye and barley; iv) 1-5 % by weight of at least one oil of vegetable origin; v) 10-20 % by weight of an additive chosen from hydrated magnesium silicate such as talcum powder; vi) 0-40 % by weight of at least one aliphatic ester; vii) 30-55 % by weight of paper fiber; viii) 0-2 % by weight of silica.

## Description

### Technical field of the invention

The present invention relates to a biodegradable and compostable composition having a unique composition of different components providing a composition that it is fully biodegradable and fully compostable after decomposition.

### Technical Background

The use of fossil based plastic materials has during late time been more and more questioned, especially when used in disposable articles, and hygiene products. The conventional raw material for the commonly used plastic polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demands large amount of water.

Moreover, to be able to recycle PE from one article to produce a new one, it has to go through a process of autoclaving to get rid of bacteria. This process is more costly than producing new PE, leading to a low degree of recycling and thus more use of the raw materials.

Further, recycled plastic or rubber has in some cases shown to compose substances toxic to human or nature, making them not suitable for use at places where they are exposed to humans.

Even further, use of plastics in many products has led to the release of small plastic components, called micro plastics, into the ground and water. Micro plastics have been found all over the globe and it is today not known what environmental effects the large distribution can have.

From both governments and public there is a large demand for better material to use in disposable products. The material used must be made to a large extent of renewable sources, be biodegradable and compostable. One such material commonly used is polylactic acid (PLA) produced from starch. However, this material comes with some drawbacks some of them being that the temperature for decomposition is 70 ºC, but the softening temperature is 50 ºC. This gives drawbacks during decomposition, since a high temperature is needed to initiate the process, while at the same time the products softens at 50 ºC which restrains the product from being used in environments with temperatures above 50 ºC.

EP 3 260 495 discloses a biodegradable polyester composition comprising 60-100 parts of biodegradable aliphatic-aromatic polyester. The composition further comprises polylactic acid (PLA), organic and/or inorganic filler as well as copolymer which contains epoxy groups and is based on styrene, acrylate and/or methacrylate.

Thus, there is a need for developing new materials for substituting plastics in many different areas, such as disposable products, and hygiene products.

### Summary of the invention

One object of the present invention is to provide a composition suitable for replacing plastics, which composition is made from renewable resources, which is biodegradable, compostable, and which does not leave micro plastics.

The present invention concerns a composition suitable for replacing plastics, which composition is biodegradable, compostable, and which does not leave micro plastics. According to the invention, the composition comprises: (i) 0-40 % by weight of at least one biodegradable and/or decayable aromatic ester; (ii) 0-15 % by weight of dolomite particles having a polished surface; (iii) 5-15 % by weight of starch of vegetable origin; (iv)1-5 % by weight of at least one oil of vegetable origin; (v) 10-20 % by weight of an additive chosen from hydrated magnesium silicate such as talcum powder; (vi) 0-40 % by weight of at least one aliphatic ester; (vii) 30-55 % by weight of paper fibers; (viii) 0-2 % by weight of silica.

The present invention also concerns a granule comprising the composition as described above.

The present invention also concerns use of a composition as described above.

Hereby an improved composition suitable for replacing plastic is provided, which is feasible for use in several disposable products, hygiene products or as carrier bag particularly suitable for multiple use, without leaving microplastics, and which is biodegradable and compostable.. Dolomite is constantly renewed in the ground, provided from minerals. During decaying or degrading in water, it will again return to the soil or seabed and act as a soil or seabed improvement agent. Further, the mix of dolomite having a polished surface, with at least one oil of vegetable origin will convert the dolomite to a lubricant. The lubricant function is further improved by an additive chosen from hydrated magnesium silicate such as talcum powder, leading to decrease of the tear of the machines used. Even further, the use of starch of vegetable origin will make the composition non-elastic and give the product a characteristic color which has a "wood-like" appearance. The "wood-like" appearance is beneficial and appealable to certain consumers since the wood-like appearance is perceived differently from a common plastic appearance which may be connected with a negative environmental effect to certain consumers/buyers. Further, the use of at least one oil of vegetable origin will act as a coupling agent in the composition leading to a low permeability compared to plastics. Even further, the use of paper fibers or any other tree fibers can reduce the use of polyesters while yet still provide a structure rigid enough to be appropriate for being used as a replacement for several plastics used today. Further, the use of silica extracts the water from the paper fibers, making the end product more stable and reducing the tear of the machine under manufacturing. Further, silica provides an effect of simplifying the handling of the paper fibers during manufacturing of the composition since it effectively compresses the paper fibers and prevents it from becoming dust.

In one embodiment said composition comprises (i) 23 % by weight of at least one biodegradable and/or decayable aromatic ester; (ii) 0 % by weight of dolomite particles having a polished surface; (iii) 8 % by weight of starch of vegetable origin chosen from at least one of wheat, oat, rye and barley; (iv) 2 % by weight of at least one oil of vegetable origin; (v) 20 % by weight of an additive chosen from hydrated magnesium silicate such as talcum powder; (vi) 10 % by weight of at least one aliphatic ester; (vii) 35 % by weight of paper fiber; (viii) 2 % by weight of silica.

In one embodiment said composition comprises (i) 0 % by weight of at least one biodegradable and/or decayable aromatic ester; (ii) 15 % by weight of dolomite particles having a polished surface; (iii) 8 % by weight of starch of vegetable origin chosen from at least one of wheat, oat, rye and barley; (iv) 2 % by weight of at least one oil of vegetable origin; (v) 5 % by weight of an additive chosen from hydrated magnesium silicate such as talcum powder; (vi) 33 % by weight of at least one aliphatic ester; (vii) 35 % by weight of paper fiber; (viii) 2 % by weight of silica, wherein said dolomite has been pre-treated with at least one oil of vegetable origin.

In one embodiment said composition comprises (i) 28 % by weight of at least one biodegradable and/or decayable aromatic ester; (ii) 5 % by weight of dolomite particles having a polished surface; (iii) 15 % by weight of starch of vegetable origin chosen from at least one of wheat, oat, rye and barley; (iv) 5 % by weight of at least one oil of vegetable origin; (v) 10 % by weight of an additive chosen from hydrated magnesium silicate such as talcum powder; (vi) 10 % by weight of at least one aliphatic ester; (vii) 25 % by weight of paper fiber; (viii) 2 % by weight of silica.

In an embodiment of the invention, said dolomite has been pre-treated with at least one oil of vegetable origin.

In one embodiment of the present invention the dolomite particles may have a particle size of about 2-4 µm.

The dolomite particles according to the present invention may have a polished surface, such that substantially no sharp edges remain on the surface of the particles. Removing substantially all the sharp edges of the particles will increase tear strength. Pre-treating the particles to saturation with at least one oil of vegetable origin will convert the dolomite particles into a lubricant which will limit the apparatus wear during processing thereof.

In one embodiment of the present invention the starch of vegetable origin may have a particle size of 10-50 µm, such as 10-40 µm, for example 20-30 µm. The starch may be chosen from at least one of wheat, oat, rye and barley or from any other suitable vegetable starch source. The use of starch will give the composition characteristics such that further processing of the granules made thereof will provide a materiel being non-elastic making the material suitable to use for bags carrying heavy loads without tearing of the fingers and re-usage. Such re-usage bags may have a size of 50-100 µm. Further, the use of starch will give a characteristic color making it possible to distinguishing products made from the invention from other similar products.

In one embodiment of the present invention the starch of vegetable origin may be pre-treated with at least one oil of vegetable origin. Using said pre-treatment will saturate the capillaries of the starch, ensuring that the starch is free from water and thereby increase the strength of the composition.

In one embodiment of the present invention the paper fiber particle size is 10-50 µm, such as 10-40 µm, for example 20-30 µm. The inclusion of paper fibers makes it possible to reduce the use of polyesters, making the composition more environmentally friendly and making it possible for the end product to decompose in water.

The composition may be suitable for use in a manufacturing method giving rise to granules. The granules that may be produced by the composition can be further processed using standard machines for processing such as blow molding, thermo forming, extrusion, and injection molding into several different shapes. The processed granules may further be used as disposable product, trough for e.g. food storage, or as carrier bags suitable for multiple use having a size of about 50-100 µm. Further for a component, such as a film or disposable, prepared from the granules of the composition according to the present invention, the decomposition of said component may be initiated at 30-35 ºC if it is present under compostable conditions with bacteria present. The decomposition may be completed within two months when nothing more than earth remains. As compared to PLA where the decomposition requires 70 ºC to be initiated, which makes higher demand on the facilities handling the decomposition. Even further, when a component prepared from the granules of the composition according to the present invention is used as a film to cover food, the qualities of the food is increased due to a 5 times lower permeability than PE and a 40 times lower permeability than cardboard. Further, when a component prepared from the granules of the composition according to the present invention may end up in the water, it is degraded over time without leaving microplastics or toxic compounds. By the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

### Definitions

The term "dolomite" means the mineral CaMg(CO₃)₂ or a commercially available product which is won from a natural occurring dolomite deposit or which is sold as "dolomite".

Talc is a clay mineral composed of hydrated magnesium silicate with the chemical formula Mg₃Si₄O₁₀(OH)₂.

The term "silica" means silicon dioxide SiO₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The term "paper fiber" means paper fiber that has been processed, eg. pulverized or moulded, from e.g. left-overs or waste from e.g. the paper industry or elsewhere. The paper fiber may also have been obtained from any other form of tree origin. The paper fiber may have a size in the range of 10-50 µm, eg 20-40 µm, such 25, 35, or 40 µm.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a composition suitable for replacing plastics which is biodegradable, compostable, and which does not leave micro plastics in the ground or water during or after use.

The biodegradable and compostable composition suitable for replacing plastic according to the present invention thus comprises
(i) 0-40 % by weight of at least one biodegradable and/or decayable aromatic ester;
(ii) 0-15 % by weight of dolomite particles having a polished surface;
(iii) 5-15 % by weight of starch of vegetable origin;
(iv) 1-5 % by weight of at least one oil of vegetable origin;
(v) 10-20 % by weight of an additive chosen from hydrated magnesium silicate such as talcum powder;
(vi) 0-40 by weight of at least one aliphatic ester;
(vii) 30-55 % by weight of paper fibers;
(viii) 0-2 % by weight of silica.

In one embodiment, said dolomite has been pre-treated with at least one oil of vegetable origin.

In one embodiment said composition comprises (i) 23 % by weight of at least one biodegradable and/or decayable aromatic ester, e.g. aromatic polyester; (ii) 0 % by weight of dolomite particles having a polished surface; (iii) 8 % by weight of starch of vegetable origin chosen from at least one of wheat, oat, rye and barley; (iv) 2 % by weight of at least one oil of vegetable origin; (v) 20 % by weight of an additive chosen from hydrated magnesium silicate such as talcum powder; (vi) 10 % by weight of at least one aliphatic ester, e.g. aliphatic polyester; (vii) 35 % by weight of paper fiber; (viii) 2 % by weight of silica.

In one embodiment said composition comprises (i) 0 % by weight of at least one biodegradable and/or decayable aromatic ester, e.g. aromatic polyester; (ii) 15 % by weight of dolomite particles having a polished surface; (iii) 8 % by weight of starch of vegetable origin chosen from at least one of wheat, oat, rye and barley; (iv) 2 % by weight of at least one oil of vegetable origin; (v) 5 % by weight of an additive chosen from hydrated magnesium silicate such as talcum powder; (vi) 33 % by weight of at least one aliphatic ester, e.g. aliphatic polyester; (vii) 35 % by weight of paper fiber; (viii) 2 % by weight of silica, wherein said dolomite has been pre-treated with at least one oil of vegetable origin.

In one embodiment said composition comprises (i) 28 % by weight of at least one biodegradable and/or decayable aromatic ester; (ii) 5 % by weight of dolomite particles having a polished surface; (iii) 15 % by weight of starch of vegetable origin chosen from at least one of wheat, oat, rye and barley; (iv) 5 % by weight of at least one oil of vegetable origin; (v) 10 % by weight of an additive chosen from hydrated magnesium silicate such as talcum powder; (vi) 10 % by weight of at least one aliphatic ester; (vii) 25 % by weight of paper fiber; (viii) 2 % by weight of silica.

In one embodiment of the present invention the biodegradable and/or decayable aromatic ester, e.g. aromatic polyester, may be a polybutylene adipate terephthalate (PBAT), a random copolymer produced from adipic acid, 1,4-butanediol, and terephthalic acid. Any other biodegradable aromatic ester with similar properties as PBAT may be used. The at least one biodegradable and/or decayable aromatic ester is present in an amount of 0-40 % by weight. For instance, 0-10, 10-20, 20-30, 30-40 % by weight. For example, the at least one biodegradable and/or decayable aromatic ester is present in an amount of 0, 23, or 28 % by weight as is disclosed in the experimental part.

In one embodiment of the present invention it may include dolomite particles. Dolomite is a material acquired from the soil, where it originates from minerals. Said particles may have a polished surface, and by polishing the surface thereof the particles do not give rise to tear initiation in a film prepared from the composition. Thus, all edges that may give rise to a tear initiation in e.g. a film has been removed on the particles, and a level surface is produced which is smooth without any sharp corners. The particles constitute 0-15 % by weight. For example, 0-5 %, 5-10 %, 10-15 % by weight of the composition. In one embodiment the particles constitute 0 % by weight of the composition, in another composition the particles constitute 5 % by weight of the composition and in another embodiment the particles constitute 15 %.

Further, according to one embodiment of the present invention, said particles may have a size of about 2-4 µm.

Said particles may be pre-treated with at least one oil of vegetable origin as to reach saturation. The mix of the particles and the oil converts the particles to a lubricant, which decreases the tear of the machines used while manufacturing the composition into e.g. granules for further processing.

In one embodiment, the composition according to the invention may include at least one oil of vegetable origin. The oil may be rape seed oil or glycerol. The at least one oil of vegetable origin constitute 1-5 % by weight of the composition. For example, 3-5 % by weight. The at least one oil of vegetable origin may for example constitute 2, or 5 % by weight of the composition.

In one embodiment, the composition according to the invention may include an additive chosen from hydrated magnesium silicate. Where talcum powder being the preferred choice. The use of hydrated magnesium silicate further increases said lubricant effect, decreasing the tear of machines even further. The hydrated magnesium silicate, such as talcum constitute 5-20 % by weight of the composition. For example, 5-10%, 10-15 %, or 15-20% by weight. In one embodiment the hydrated magnesium silicate constitutes 5 % by weight of the composition, in another composition the hydrated magnesium silicate constitutes 10 % by weight of the composition. In yet another embodiment it constitutes 20 % by weight of the total weight of the composition.

The composition may in one embodiment according to the invention include starch of a vegetable origin, said starch being chosen from at least one of wheat, oat, rye and barley, where said starch having a particle size of 10-50 µm, for instance around 10, 20, 30, 40 or 50 µm. The starch as used in the invention may originate from any vegetable source and not limited to the examples as disclosed herein. The starch of vegetable origin constitutes 5-15 % by weight of the composition. For example, 5-10% or by weight. The composition constitutes for example of 8 or 15 % by weight of starch. The use of starch gives the composition a characteristic "wood-like" color. This "wood-like" color is beneficial for the end product since its appearance will differ from other products of the same category. The addition of starch gives the composition characteristics such that further processing of the granules that may be made thereof will provide a material being non-elastic making said material suitable to use for bags carrying heavy loads without tearing of the fingers. In one further embodiment according to the invention, the starch being pre-treated with at least one oil of vegetable origin erasing water from the starch, increasing the firmness of the composition.

In one embodiment, the aliphatic ester, e.g. aliphatic polyester, is an acid modified with alcohol. In another embodiment, the aliphatic ester, e.g. aliphatic polyester, consists of polymerized units, where the repeating units consist of up to 15 carbon atoms such as up to 10 carbon atoms. In yet another embodiment, the aliphatic ester, e.g. aliphatic polyester, is a biodegradable polyester, such as polybutylene succinate (PBS). Polybutylene succinate being a fossil-free renewable polyester synthesized from 1,4-butane diol and succinic acid. PBS consists of polymerized units of butylene succinate, with repeating C₈H₁₂O₄ units. In another embodiment, the aliphatic ester, e.g. aliphatic polyester, may be polybutyl acrylate. Polybutyl acrylate (PBA) being synthesized e.g. from acetylene, 1-butyl alcohol, carbon monoxide, nickel carbonyl, and hydrochloric acid. PBA consists of polymerized units of butyl acrylate, with repeating (C₇H₁₂O₂) units. In yet another embodiment, the aliphatic ester, e.g. aliphatic polyester, may be polyhydroxy butyrate (PHB). In one embodiment, the PHB may be poly-3-hydroxybutyrate (P3HB). In yet another embodiment the PHB may be poly-4-hydroxybutyrate (P4HB). Polyhydroxy butyrate is a polyhydroxy-alkanoate (PHA), a polymer belonging to the polyesters class that are of interest as bio-derived and biodegradable. Polyhydroxyalkanoates or PHAs are polyesters produced in nature by numerous microorganisms. When produced by bacteria they serve as both a source of energy and as a carbon store. More than 150 different monomers can be combined within this family to give materials with extremely different properties. These materials are biodegradable and are used in the production of bioplastics. PHB is a compostable and biodegradable polyester and derived from renewable sources as it is produced by microorganisms as a response to physiological stress. Using polyhydroxyl butyrate allows for degradation of the end product in water. Any other aliphatic polyester having similar properties as polybutylene succinate, polybutyl acrylate or polyhydroxy butyrate may be used. The at least one aliphatic ester, such as a biodegradable aliphatic ester, may constitute 0-40 % by weight of the composition. For example, 0-10 %, 10-20 %, 20-30 %, 30-40 % by weight of the composition. The composition constitutes for example 10, or 33, % by weight of at least one aliphatic ester as is described in the experimental part.

The composition may in one embodiment according to the invention include paper fiber, where said paper fiber being processed to a powder with a particle size of 10-50 µm, for instance around 10, 20, 30 40, or 50 µm. The paper fiber constitutes 30-55 % by weight of the composition. For instance, 30-35 %, 35-40, 40-45, 45-50 or 50-55 % by weight of the composition. The composition constitutes for example 25 % or 35 % by weight of paper fiber. The paper fiber can be produced from waste material in the paper industry or in the wood industry. Any other similar source of paper fiber may be used. The paper fiber is a renewable source of material, making the end-product more environmentally friendly and sustainable. The composition comprising paper fiber may be degradable and solvable in water, which is beneficial from an environmentally point of view. It is a well-known problem that nature including the oceans and lakes around the globe are full of plastics which are non-solvable in water.

The composition may in one embodiment according to the invention include silica. Silica is an oxide of silicone, naturally found as quartz. The silica constitutes 0-2 % by weight of the composition. For instance, 0-1 or 1-2 % by weight of the composition. The composition constitutes for example 0 or 2 % by weight of silica. By using silica, it helps processing the paper fibers making it easier for the machine to handle and removes the dust from the paper fibers. Further, it reduces the water content of the paper fiber, making the end product less brittle.

In a further embodiment said composition further comprises at least one flavoring agent. A flavoring agent as used in the composition of the invention is a chemical compound that has a nice smell or odor. Examples of such flavoring agents is for instance coffee powder, honey or lavender or any other suitable pleasant odor. A lid and a disposable product prepared by a composition including e.g. paper fiber as defined herein, which is e.g. intended for a drink such as coffee, would additionally have a pleasant smell. The flavoring agent would mask a possible smell of for instance paper fiber or any of the other components as added to the composition.

In another embodiment of the invention granules are provided comprising the composition as defined above and in the examples. The composition of the invention may be processed by conventional methods to granules which may be further processed using conventional machines to the desired end-product.

In a compost container, the formation of methane gas requires 30-35 ºC to start. The methane gas further increases the growth of bacteria, which starts the decaying process. For the present invention, this is enough for the decaying process to start, while bioplastic compositions comprising PLA according to prior art require a temperature of 70 ºC for the decomposition to start. A product, for example a film with the thickness of up to 25 µm, and even up to 1 mm, produced from the granules that may be made from the composition according to the present invention can be fully decomposed in 180 days during the conditions stated above. If the temperature is further increased to 55 ºC the decomposition process will be reduced to a time of some weeks.

During decaying process of products prepared from the granules that may be created from the present invention, some of the product will decay and may give rise to biogas, and the remaining within the digested sludge will be spread out on the fields. Dolomite will not influence the decaying process but will act as soil improvement agent out on the fields as it will neutralize the pH, which is favorable for soil. The dolomite will for instance provide the soil with growth factors such as calcium and magnesium and other important minerals.

If the end product ends up in the water, the composition may break down without leaving any rest products in the water. The dolomite may then act as an improvement agent of the seabed.

The problem with the use of plastic material from fossil sources, or from raw material which does not degrade in nature are getting increased attention from governments as well as the public. The use of plastics in products giving rise to micro plastics in soil and water has also gained interest during later years. The composition of the present invention is fully biodegradable and compostable, without being a source of micro plastics. The dolomite is a neutral component within the composition, as it returns back to the nature in the same form as it is withdrawn from the nature. The starch and the oil according to the present invention come from vegetable origin, which is a renewable raw material, while the aromatic esters available on the market as of today mostly is from non-renewable raw material, but also from partly renewable and fully degradable sources, such as PBAT disclosed above. The paper fibers of the present invention are a rest product from the paper or wood industry and comes from renewable sources. The silica is a natural compound from renewable sources. The composition according to the present invention may only comprise 6-30 % of non-renewable raw material.

The composition may be processed to granules which may be further processed using conventional machines and processing techniques such as blow molding, thermo forming, extrusion, and injection molding. The use of dolomite, which is being saturated with at least one oil of vegetable origin, will act as a lubricant for the machine. Decreasing the tear thereof, as compared to processing of other materials.

From the processing of the granules, several products can be produced. Among them are hygiene articles, disposable products, troughs for e.g. food storage and carrier bags suitable for multiple use. For further use, said composition provides with characteristics for a material as to be very flexible, such that it can be hard to break even stiff products prepared from the granules of said composition. This might be advantageous since the breaking of products can give rise to sharp structures which can be harmful. A flexible non-breakable product can then erase the risk of using the product as a sharp weapon if the products is used as for instance a disposable cutlery. Further, a film produced from the granules of the present invention can be used as a coating of for instance cardboard boxes or cardboard packages as used for foods such as dairy products.

The use of at least one oil of vegetable origin to saturate dolomite particles as well as starch of vegetable origin prevents water from permeabilizing the composition which increases tear strength and reduces permeability. This increases comfortability and usability when the granules made from the present invention are further processed to be used as bags.

Mixing dolomite particles with at least one oil of vegetable origin until saturation and with an additive chosen from hydrated magnesium silicate such as talcum powder allows the mix to act as a lubricant, reducing the tear of the machines used.

The composition may further be mixed and then it may be cut into granules. The granules may then be used for further processing using standard machine processes such as blow molding, thermo forming, extrusion, or injection molding. From such processes, several different products can be made such as hygiene products, disposable articles, troughs for food storage, and carrier bags suitable for multiple use.

### EXAMPLES

By way of examples, and not limitation, the following examples identify a variety of compositions pursuant to the embodiments of the present invention. As a compilation, the experiments followed are compiled in the table below.

| | **Claim 1** (% by weight) | **Experiment 1** (% by weight) | **Experiment 2** (% by weight) | **Experiment 3** (% by weight) |
|---|---|---|---|---|
| Aromatic ester | 0-40 % | 23 % | 0 % | 28 % |
| Dolomite particles | 0-15 % | 0 % | 15 % | 5 % |
| Starch | 5-15 % | 8 % | 8 % | 15 % |
| Oil | 1-5 % | 2 % | 2 % | 5 % |
| Hydrated magnesium silicate | 10-20 % | 20 % | 10 % | 10 % |
| Aliphatic ester | 0-40 % | 10 % | 28 % | 10 % |
| Paper fiber | 30-55 % | 35 % | 35 % | 25 % |
| Silica | 0-2 % | 2 % | 2 % | 2 % |

### Experiment 1

In the first experiment 23 % by weight of PBAT was mixed with 20 % by weight of talcum powder, 10 % by weight of PBS, 8 % by weight of rye, 2 % by weight of rape seed oil, 35 % by weight of paper fibers and 2 % by weight of silica during heating to 150 ºC under a pressure of 225 bar. The mixing was done in an extruder.

Using the extruder, the composition was pushed out of the extruder and cut into granules in the range of 1-5 mm, such as 2-4 mm, for instance 2-3mm. The total weight of the composition was 5000 ton.

### Experiment 2

In the second experiment 15 % by weight, of the final composition, of dolomite particles was polished to remove sharp edges. The particles were next mixed with 2 % by weight of glycerol, to transform the particles into a lubricant.

Further, 35 % by weight of wood fibers was heat mixed at a temperature of 200 ºC and a pressure of 225 bar with 8 % by weight of rye, 5 % by weight of talcum powder, 33 % by weight of PHB and 2 % by weight of silica. The mixing was performed in an extruder and the lubricant mix of dolomite and glycerol was added to the mixture.

The mixture was pressed out of the extruder and cut into granules. The total weight of the composition was 5000 ton.

### Experiment 3

In a third experiment 5 % by weight, of the final composition, of dolomite particles were polished to remove sharp edges. It was further mixed with 5 % by weight of rapeseed oil to acquire a lubricant effect of the mixture.

28 % by weight of PBAT was further, under a temperature of 200 ºC and a pressure of 225 bar, mixed with 15 % by weight of rye, 10 % by weight of talcum powder and 25 % by weight of paper fibers, 2 % by weight of silica, and 10 % by weight of PBS. The mixing was performed in an extruder and the lubricant mixture was further added. The mixture was further cut into granules. The total weight of the composition was 5000 ton.

## Claims

1. A biodegradable and compostable composition comprising:
(i) 0-40 % by weight of at least one biodegradable and/or decayable aromatic ester;
(ii) 0-15 % by weight of dolomite particles having a polished surface;
(iii) 5-15 % by weight of starch of vegetable origin;
(iv) 1-5 % by weight of at least one oil of vegetable origin;
(v) 10-20 % by weight of an additive chosen from hydrated magnesium silicate;
(vi) 0-40 % by weight of at least one aliphatic ester;
(vii) 30-55 % by weight of paper fiber;
(viii) 0-2 % by weight of silica.

2. A composition according to claim 1 , wherein said dolomite particles have been pre-treated with said at least one oil of vegetable origin.

3. A composition according to claim 1 or 2, wherein said dolomite particles have a particle size of 2-4 µm.

4. A composition according to any of claims 1 - 3, wherein said starch of vegetable origin has a particle size of 10-50 µm.

5. A composition according to any one of claims 1-4, wherein said starch of vegetable origin has been pre-treated with at least one oil of vegetable origin.

6. A composition according to any of claims 1-5, wherein said paper fiber has a particle size of 10-50 µm.

7. A composition according to any of claims 1-6, wherein said paper fiber is obtained from left-overs or waste from the paper industry.

8. A composition according to any one of claims 1-7, wherein said hydrated magnesium silicate is talcum powder.

9. A composition according to any one of claim 1-8, wherein said aliphatic ester is a biodegradable aliphatic ester.

10. A composition according to any one of claims 1-9, wherein said composition further comprises at least one flavoring agent.

11. A composition according to any one of claims 1-10, wherein said starch is chosen from at least one of wheat, oat, rye and barley.

12. A granule comprising the composition as defined in any one of the claims 1-11.

13. Use of a composition according to any one of claims 1-11 or a granule as defined in claim 12 as a formable material for replacing fossil-based plastics.
